Europäisches Patentamt

European Patent Office

Office européen des brevets

(19)

(11) Veröffentlichungsnummer: **0 254 884**
**B1**

(12) **EUROPÄISCHE PATENTSCHRIFT**

(45) Veröffentlichungstag der Patentschrift:
28.02.90

(51) Int. Cl.⁴: **G05B 19/42**

(21) Anmeldenummer: 87109323.3

(22) Anmeldetag: 29.06.87

(54) Verfahren zum Bestimmen von die Steuerung eines Roboters

(30) Priorität: 09.07.86 DE 3623070

(43) Veröffentlichungstag der Anmeldung:
03.02.88 Patentblatt 88/5

(45) Bekanntmachung des Hinweises auf die Patenterteilung:
28.02.90 Patentblatt 90/9

(84) Benannte Vertragsstaaten:
CH DE FR GB IT LI NL SE

(56) Entgegenhaltungen:
FR-A- 1 557 915
FR-A- 2 393 359

(73) Patentinhaber: **Siemens Aktiengesellschaft,
Wittelsbacherplatz 2, D-8000 München 2(DE)**

(72) Erfinder: **Fuehrer, Diethelm, Dipl.-Ing., Erlanger
Strasse 11, D-8525 Uttenreuth(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren zum Bestimmen von die Steuerung eines Roboters leitenden Raumpunkten, welche die Knickpunkte von aufeinanderfolgenden linearen Bewegungsabschnitten angeben, die als Gesamtheit mit einer vorgebbaren Lagetoleranz sich an eine ideale Bewegungsbahn für den Roboter annähern.

Zur Steuerung der Bewegung von Roboterarmen hat es sich als vorteilhaft erwiesen, die anzustrebende ideale Bewegungsbahn in einzelne lineare Bewegungsabschnitte aufzulösen. Dadurch, daß dann einzig und allein die Knickpunkte der Robotersteuerung zuzuführen sind und zwischen diesen Knickpunkten der Verfahrweg durch einen Interpolator gesteuert wird, ergibt sich eine schnelle und technisch einfache Steuerung der Bewegungsbahn. Die Programmierung der Knickpunkte muß jedoch einzeln mit Hilfe einer Handverfahrtaste am Bedienfeld oder am Programmiergerät vorgenommen werden. Damit obliegt die Auswahl der Knickpunkt dem Geschick des Bedieners bzw. Programmierers und führt nur dann zu reproduzierbaren Lösungen, wenn die Kontur klar unterscheidbare geometrische Formen betrifft.

Aufgabe der Erfindung ist es, ein Verfahren der eingangs genannten Art so auszubilden, daß eine automatische Bestimmung der Knickpunkte möglich ist.

Gemäß der Erfindung wird diese Aufgabe durch die folgenden Verfahrensschritte gelöst:

a) Die ideale Bewegungsbahn wird von einem Ausgangsort als erstem bis zu einem Zielort als letztem Ort der idealen Bewegungsbahn in Feinwegabschnitte aufgelöst,

b) die Koordinaten sämtlicher Orte der idealen Bewegungsbahn werden gespeichert,

c) der Ausgangsort wird als Startpunkt des ersten linearen Bewegungsabschnittes und somit als erster Raumpunkt mit seinen Koordinaten gespeichert,

d) der dem aktuellen Startpunkt unmittelbar folgende Ort der idealen Bewegungsbahn wird als Hilfspunkt zum vorläufigen Festlegen der räumlichen Lage des relevanten linearen Bewegungsabschnittes herangezogen,

e) die räumliche Lage des relevanten linearen Bewegungsabschnittes wird durch die Koordinaten des jeweiligen Startpunktes und die Koordinaten des aktuellen Hilfspunktes definiert,

f) es wird der Abstand des im weiteren folgenden Ortes der idealen Bewegungsbahn zu der den jeweiligen linearen Bewegungsabschnitt bezeichnenden Geraden ermittelt,

g) sofern dieser Abstand größer als die vorgebbare Lagetoleranz ist, wird der vorangehende Hilfspunkt zum Endpunkt dieses linearen Bewegungsabschnittes und zum Startpunkt eines folgenden linearen Bewegungs-abschnittes,

h) die Koordinaten dieses Raumpunktes werden gespeichert und die Verfahrensschritte ab dem Verfahrensschritt d) beginnen neu,

i) sofern dieser Abstand kleiner ist als die vorgebbare Lagetoleranz, wird der aktuelle Hilfspunkt auf die Strecke zwischen seiner bisherigen Lage und den nächstfolgenden Ort der idealen Bewegungsbahn verlegt, wobei je nach Anzahl der vom letzten Startpunkt aus bereits berücksichtigten Feinwegabschnitte diese Strecke entsprechend dieser Anzahl geteilt wird und der Hilfspunkt in seiner Lage auf den dem bisherigen Hilfspunkten nächstliegenden Teilungspunkt verlegt wird, woraufhin die Verfahrensschritte ab dem Verfahrensschritt e) neu beginnen.

Bei diesem Verfahren liegen die ermittelten Raumpunkte um so weiter auseinander, je schwächer die Krümmung der Bewegungsbahn ist. Dadurch ergibt sich einen Datenreduktion, die eine optimale Speicherausnutzung ermöglicht und unnötig kurze Bewegungssätze lassen sich vermeiden.

Eine vorteilhafte Ausbildung der Erfindung ist dadurch gekennzeichnet, daß die Streckenteilung gemäß dem Verfahrensschritt i) linear erfolgt. Damit ergibt sich eine äußerst einfache Beziehung, nach der die Verlagerung der Hilfspunkte je nach Anzahl der bereits berücksichtigten Feinwegabschnitte variiert wird.

Ein Ausführungsbeispiel der Erfindung ist in der Zeichnung dargestellt und wird im folgenden näher erläutert.

Dabei zeigen:

Fig. 1 ein Blockschaltbild einer Einrichtung zum Durchführen des erfindungsgemäßen Verfahrens und die

Fig.2-8 die Verfahrensschritte, die von einer idealen Bewegungsbahn zu daraus abgeleiteten linearen Bewegungsabschnitten führen.

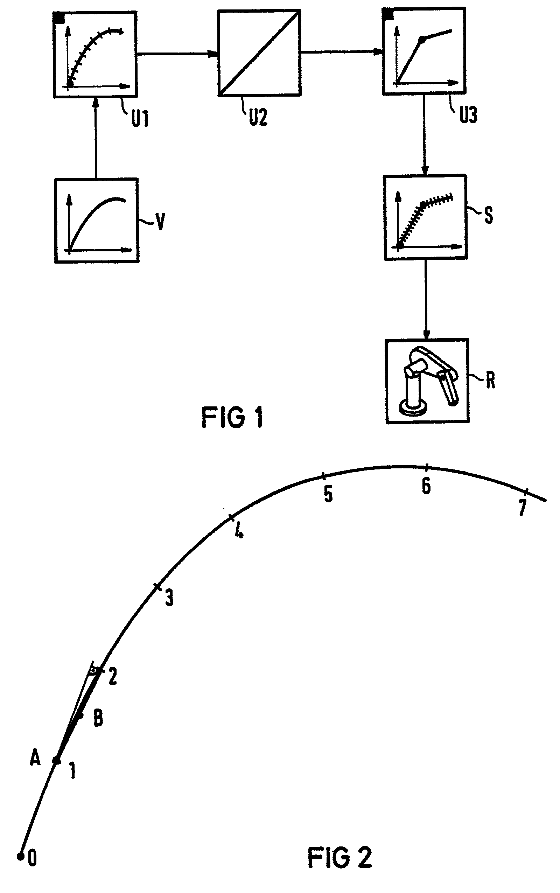

In der Darstellung gemäß Fig.1 ist ein Roboter R gezeigt, dessen Bewegung entsprechend einer idealen Bewegungsbahn gesteuert werden soll, wie diese durch eine Vorlage V angegeben ist. Die Vorlage V, sei es eine Druckvorlage oder ein Modell, wird mit Hilfe eines Umsetzers U1 abgetastet und von diesem Umsetzer U1 wird die ideale Bewegungsbahn von einem Ausgangspunkt als erstem bis zu einem Zielort als letztem Ort in Feinwegabschnitt aufgelöst. Die Feinwege können dabei nährungsweise äquidi-stant zueinander sein. Ferner werden im Umsetzer U1 die Koordinaten sämtlicher Orte der idealen Bewegungsbahn gespeichert. Die gespeicherten Koordinaten gelangen an einen Umsetzer U2, mit dessen Hilfe entsprechend dem erfindungsgemäßen Verfahren die Knickpunkte von aufeinanderfolgenden linearen Bewegungsabschnitten ermittelt werden, die als Gesamtheit mit einer vorgebbaren Lagetoleranz sich an die ideale Bewegungsbahn für den Robo-ter R annähern. Die Koordinaten der Knickpunkte werden in einem Umsetzer U3 gespeichert und stehen dann einer Steuerung S für den Roboter R zur Verfügung, wobei die Steuerung S eine Interpolation der linearen Bewegungsabschnitte von Knickpunkt zu Knickpunkt ermöglicht.

In der Dargstellung gemäß Fig.2 ist durch eine gekrümmte Kontur die ideale Bewegungsbahn für den Roboter R vorgegeben. Als Ausgangsort der idealen Bewegungsbahn ist ein Ort 0 angenommen, als Zielort ein Ort 7. Zwischen diesen beiden Orten 0 und 7 sind in äquidistanten Feinwegabschnitten die Orte 1 bis 6 angeordnet. (Die Orte 0 bis 7 sind durch Striche auf der idealen Bewegungsbahn angeordnet.) Der Ausgangsort O wird als Startpunkt eines ersten linearen Bewegungsabschnittes gewählt und der diesem Startpunkt unmittelbar folgende Ort der idealen Bewegungsbahn, d.h. der Ort 1, wird als Hilfspunkt A zum vorläufigen Festlegen der räumlichen Lage des ersten linearen Bewegungsabschnittes herangezogen. Damit ergibt sich eine Gerade vom Ausgangsort O durch den Hilfspunkt A, die beabstandet zum Ort 2 verläuft. In der Darstellung sind sowohl der Startpunkt des ersten linearen Bewegungsabschnittes als auch alle folgenden Hilfspunkte jeweils durch einen Kreis markiert.

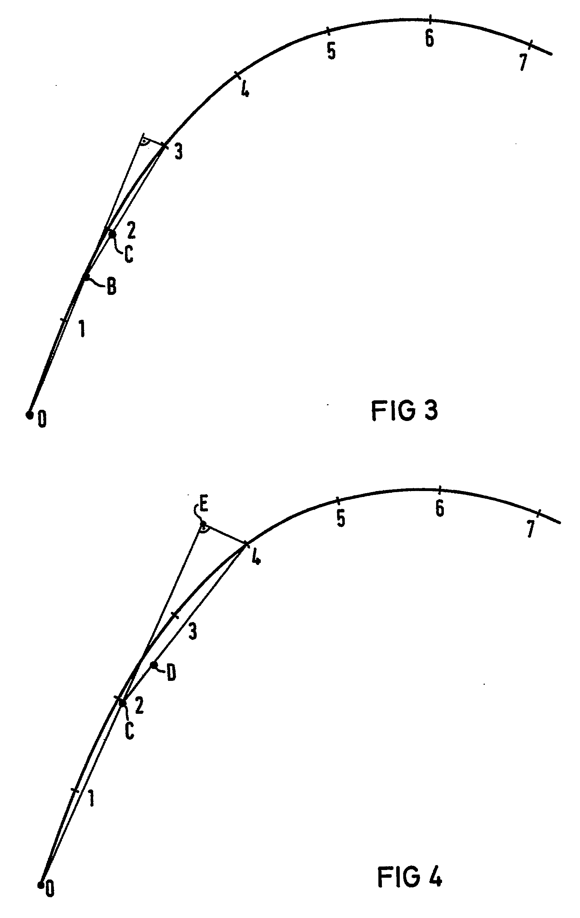

Im Ausführungsbeispiel ist angenommen, daß dieser Abstand kleiner ist als eine vorgegebene Lagetoleranz. Deshalb wird nunmehr die Lage des Hilfspunktes A auf einen Punkt B hin verlagert, der sich zwischen dem Ort 2 und dem bisherigen Hilfspunkt A befindet. Dies bedeutet, daß - wie in Fig.3 angedeutet ist - der erste lineare Bewegungsabschnitt in seiner Richtung korrigiert worden ist. Dieser Bewegungsabschnitt wird nunmehr durch eine Gerade beschrieben, die durch den Ausgangsort O und den aktuellen Hilfspunkt B verläuft.

Vom Ort 3 wird nunmehr der Abstand zu dieser Geraden gebildet. Im Ausführungsbeispiel ist angenommen, daß dieser Abstand immer noch kleiner ist als die vorgegebene Lagetoleranz. Da nunmehr bereits der dritte Feinwegabschnitt berücksichtigt worden ist, wird der letztgenannte Hilfspunkt B in seiner Lage so auf die Strecke zwischen dem Hilfspunkt B und dem Ort 3 verlagert, daß diese Strecke gedrittelt ist, wobei der nächstliegende Teilungspunkt zum aktuellen Hilfspunkt B, d.h. der Punkt C, nunmehr zum neuen Hilfspunkt B wird.

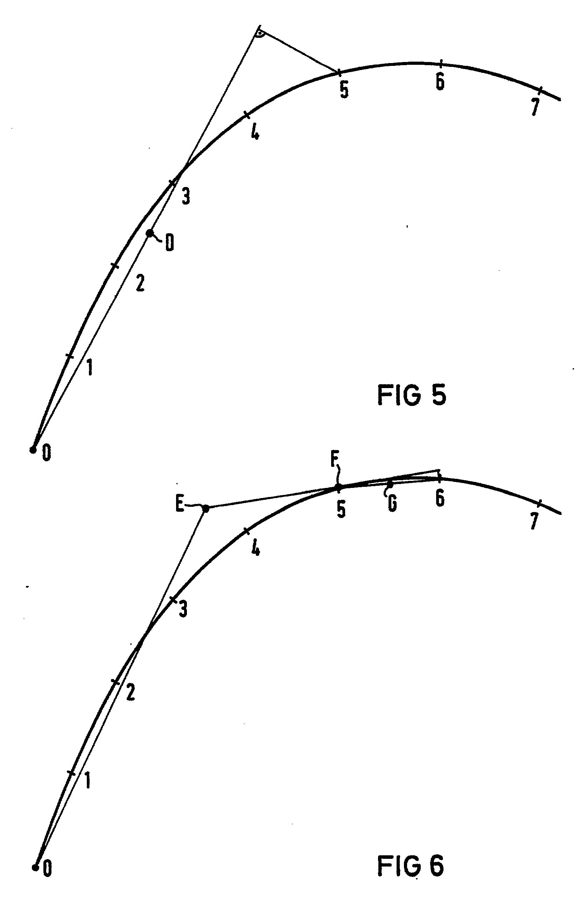

In der Darstellung gemäß Fig.4 ist gezeigt, wie der erste lineare Bewegungsabschnitt nunmehr vom Ausgangsort 0 durch den Hilfspunkt C verläuft. Die resultierende Gerade möge auch zum Ort 4 der idealen Bewegungsbahn einen solchen Abstand aufweisen, daß dieser kleiner ist als die vorgegebene Lagetoleranz. Demzufolge wird ein neuer Hilfspunkt, nämlich der Punkt D ermittelt, der auf der Strecke zwischen dem aktuellen Hilfspunkt C und dem Ort 4 liegt, wobei, da der vierte Feinwegabschnitt vorliegt, diese Strecke geviertelt wird und der nächstliegende Teilungspunkt zum Punkt C ist der Punkt D, durch den jetzt der erste lineare Bewegungsabschnitt - ausgehend vom Ausgangsort O - verläuft, wie dies in der Darstellung gemäß Fig.5 gezeigt ist.

Nun tritt jedoch der Fall ein, daß die resultierende Gerade zum Ort 5 einen Abstand aufweist, der größer ist als die vorgegebene Lagetoleranz. In diesem Fall ergibt sich der Endpunkt des ersten linearen Bewegungsabschnittes als der nahegelegenste Raumpunkt auf der Geraden zwischen den Punkten 0 und C zum Ort 4. Dieser Endpunkt ist als Knickpunkt E in der Figur 4 gezeigt.

In der Darstellung gemäß Fig.6 ist gezeigt, wie gemäß dem erfindungsgemäßen Verfahren der zweite lineare Bewegungsabschnitt ermittelt wird. Der Knickpunkt E wird nunmehr als Startpunkt für den zweiten linearen Bewegungsabschnitt gewählt und der Ort 5 der idealen Bewegungsbahn wird als Ort für die den zweiten Bewegungsabschnitt angebende Gerade angenommen. Diese Gerade wird auf ihren Abstand zum Ort 6 hin untersucht und da im Ausführungsbeispiel der resultierende Abstand kleiner ist als die vorgegebenen Lagetoleranz wird die Strecke zwischen dem Ort 5, der als vorläufiger Hilfspunkt F gedient hat, halbiert und es ergibt sich ein neuer vorläufiger Hilfspunkt G.

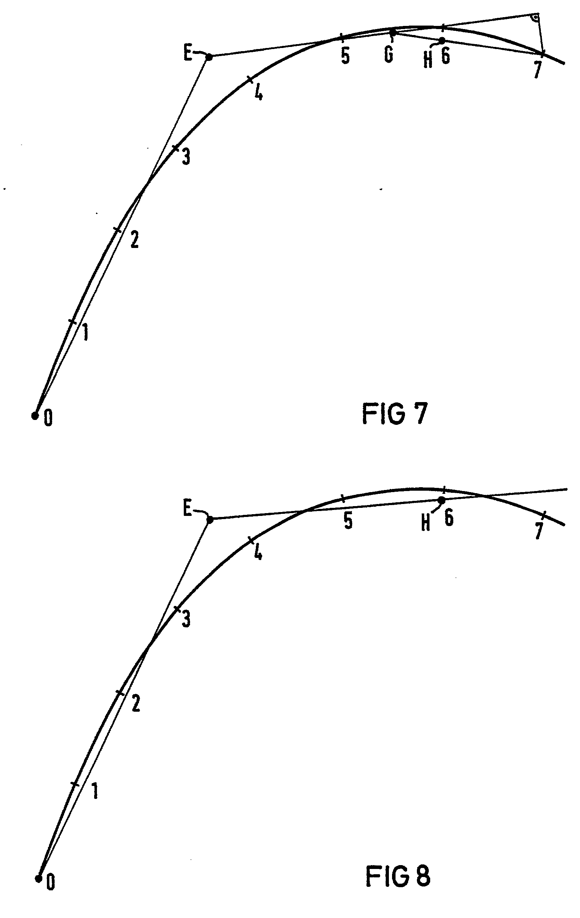

In der Darstellung gemäß Fig.7 ist gezeigt, daß sich der zweite lineare Bewegungsabschnitt nunmehr dadurch ergibt, daß eine Gerade durch den Knickpunkt E und den Hilfspunkt G verläuft, woraufhin der Abstand vom Ort 7 zu dieser Geraden ermittelt wird. Da der resultierende Abstand kleiner ist als die vorgegebene Lagetoleranz und da seit dem Startpunkt für den zweiten Bewegungsabschnitt, d.h. seit dem Knickpunkt E, drei Feinwegabschnitte bereits berücksichtigt worden sind, wird die Strecke zwischen dem Ort 7 der idealen Bewegungsbahn und dem Hilfspunkt G gedrittelt, durch der dem Hilfspunkt G nächste Teilungspunkt als neuer Hilfspunkt H Verwendung findet.

In der Darstellung gemäß Fig.8 ist als Endzustand für die Lage des zweiten linearen Bewegungsabschnittes gezeigt, wie die diesen bezeichnenden Gerade durch den Eckpunkt E und den letztgenannten Hilfspunkt H verläuft.

Während beim Ausführungsbeispiel die ideale Bewegungsbahn nur in der zweidimensionalen Ebene verläuft, ist es jedoch auch möglich, daß diese Bewegungsbahn beliebig im dreidimensionalen Raum angesetzt wird, wie dies für die Bewegung von Robotern typisch ist.

Beim oben beschriebenen Verfahren wird die ideale Bewegungsbahn durch lineare Bewegungsabschnitte angenähert, die dann durch die Steuerung des Roboters interpoliert werden. Es ist jedoch auch denkbar, daß eine ideale Bewegungsbahn durch zirkulare Bewegungsabschnitt angegeben wird, die bei üblichen Steuerungen ebenfalls ohne weiteres interpolierbar sind.

## Patentansprüche

1. Verfahren zum Bestimmen von die Steuerung eines Roboters leitenden Raumpunkten, welche die Knickpunkte von aufeinanderfolgenden linearen Bewegungsabschnitten angeben, die als Gesamtheit mit einer vorgebbaren Lagetoleranz sich an eine ideale Bewegungsbahn für den Roboter annähern, **gekennzeichnet** durch die folgenden Verfahrensschritte:

    a) Die ideale Bewegungsbahn wird von einem Ausgangsort (0) als erstem bis zu einem Zielort (7) als letztem Ort der idealen Bewegungsbahn in Feinwegabschnitte aufgelöst,

    b) die Koordinaten sämtlicher Orte (0-7) der idealen Bewegungsbahn werden gespeichert,

    c) der Ausgangsort (0) wird als Startpunkt des ersten linearen Bewegungsabschnittes und somit als erster Raumpunkt mit seinen Koordinaten gespeichert,

d) der dem aktuellen Startpunkt (0 bzw.E) unmittelbar folgende Ort (1 bzw.5) der idealen Bewegungsbahn wird als Hilfspunkt (A bzw.F) zum vorläufigen Festlegen der räumlichen Lage des relevanten linearen Bewegungsabschnittes herangezogen,

e) die räumliche Lage des relevanten linearen Bewegungsabschnittes wird durch die Koordinaten des jweiligen Startpunktes (0 bzw.E) und die Koordinaten des aktuellen Hilfspunktes (A bzw.F) definiert,

f) es wird der Abstand des im weiteren folgenden Ortes (2 bzw.6) der idealen Bewegungsbahn zu der den jeweiligen linearen Bewegungsabschnitt bezeichnenden Gera-den ermittelt,

g) sofern dieser Abstand größer als die vorgebbare Lagetoleranz ist, wird der vorangehende Hilfspunkt (E) zum Endpunkt dieses linearen Bewegungsabschnittes und zum Startpunkt eines folgenden linearen Bewegungsab-schnittes,

h) die Koordinaten dieses Raumpunktes werden gespeichert und die Verfahrensschritte ab dem Verfahrensschritt d) beginnen neu,

i) sofern dieser Abstand kleiner ist als die vorgebbare Lagetoleranz, wird der aktuelle Hilfspunkt (A bzw.B bzw.C bzw.F bzw.G) auf die Strecke zwischen seiner bisherigen Lage und dem nächstfolgenden Ort (2 bzw.3 bzw.4 bzw.6 bzw.7) der idealen Bewegungsbahn verlegt, wobei je nach Anzahl der vom letzten Startpunkt aus bereits berücksichtigten Feinwegabschnitte diese Strecke entsprechend dieser Anzahl geteilt wird und der Hilfspunkt in seiner Lage auf den dem bisherigen Hilfspunkten nächstliegenden Teilungspunkt (B bzw.C bzw.D bzw.G bzw.H) verlegt wird, woraufhin die Verfahrensschritte ab dem Verfahrensschritt e) neu beginnen.

2. Verfahren nach Anspruch 1, **dadurch gekennzeichnet,** daß die Streckenteilung gemäß dem Verfahrensschritt i) linear erfolgt.

Claims

1. A method for determining spatial points guiding the control of a robot, which spatial points represent the bend points of successive linear movement sections, which as an entirety with a given positional tolerance approximate an ideal path of movement for the robot, characterised by the following method steps:

a) The ideal path of movement is broken up into small path sections form a starting point (0) as the first point to a target point (7) as the last point of the ideal path of movement,

b) the coordinates of all the points (0 - 7) along the ideal path of movement are stored,

c) the starting point (0) is stored with its coordinates as the starting point of the first linear movement section and therefore as the first spatial point,

d) the point (1 or 5) on the ideal path of movement directly following the current starting point (O or

E) is used as an auxiliary point (A or F) for provisionally determining the spatial postion of the relevant linear movement section,

e) the spatial position of the relevant linear movement section is defined by the coordinates of the respective starting point (O or E) and the coordinates of the current auxiliary point (A or F),

f) the distance from the subsequent point (2 or 6) on the ideal path of movement to the straight line designating the respective linear movement section is determined,

g) if this distance is greater than the given positional tolerance, the preceding auxiliary point (E) becomes the final point of the said linear movement section and the starting point of a subsequent linear movement section,

h) the coordinates of this spatial point are stored and the method steps from step (d) are repeated,

i) if this distance is smaller than the given positional tolerance, the current auxiliary point (A, B, C, F, or G) is displaced along the line between its former position and the subsequent point (2, 3, 4, 6 or 7) on the ideal parth of movement, the said line being divided according to the number of small path sections already taken into account since the last starting point and the position of the auxiliary point being displaced to the dividing point (B, C, D, G or H) nearest the former auxiliary point, the method steps from step e) the being repeated.

2. A method according to claim 1, characaterised in that the line division according to the method step i) is effected linearly.

Revendications

1. Procédé pour déterminer des points dans l'espace, qui guident la commande d'un robot et indiquent les points anguleux de sections linéaires successives de déplacement, qui, dans leur totalité, se rapprochent d'une trajectoire idéale de déplacement pour le robot, moyennant une tolérance de position pouvant être prédéterminée, caractérisé par les étapes opératoires suivantes :

a) on divise la trajectoire idéale à partir d'un emplacement (0) constituant le premier emplacement jusqu'à un emplacement de destination (7) constituant le dernier emplacement de destination de la trajectoire idéale en des sections de déplacements fines,

b) les coordonnées de tous les emplacements (0-7) de la trajectoire idéale sont mémorisées,

c) l'emplacement de départ (0) est mémorisé par ses coordonnées en tant que point de départ de la première section linéaire de déplacement et par conséquent en tant que premier point dans l'espace,

d) l'emplacement de la trajectoire idéale (1 ou 5), qui succède directement au point de départ actuel (0 ou E), est utilisé en tant que point auxiliaire (A ou F) pour la détermination préalable de la position dans l'espace de la section de déplacement considérée,

e) on définit la position dans l'espace de la section linéaire de déplacement considérée par les coordonnées du point de départ respectif (0 ou E) et par les coordonnées du point auxiliaire actuel (A ou F),

f) on détermine à distance entre l'emplacement immédiatement suivant (2 ou 6) de la trajectoire idéale de déplacement et la droite désignant la section linéaire respective de déplacement,

g) dans la mesure où cette distance est supérieure à la tolérance de position pouvant être prédéterminée, le point auxiliaire précédent (0) devient le point d'extrémité de cette section linéaire de déplacement et le point de départ d'une section linéaire suivante de déplacement,

h) on mémorise les coordonnées de ce point de l'espace et on met à nouveau en oeuvre les étapes opératoires à partir de l'étape opératoire d),

i) dans la mesure où cette distance est inférieure à la tolérance de position pouvant être prédéterminée, on déplace le point auxiliaire actuel (A ou B ou C ou F ou G) sur le trajet s'étendant entre sa position assumée jusqu'ici et l'emplacement immédiatement suivant (2 ou 3 ou 4 ou 6 ou 7) de la trajectoire idéale de déplacement, auquel cas on procède à une subdivision de ce trajet en fonction du nombre des sections de déplacement fines déjà considérées à partir du dernier point de départ, et on déplace la position du point auxiliaire pour l'amener au point de subdivision (B ou C ou D ou G ou H) qui est le plus proche du point auxiliaire précédent, à la suite de quoi on met en oeuvre à nouveau les étapes opératoires à partir de l'étape opératoire e).

2. Procédé suivant la revendication 1, caractérisé par le fait que la subdivision du trajet s'effectue linéairement conformément à l'étape opératoire i).

EP 0 254 884 B1

FIG 1

FIG 2

FIG 3

FIG 4

FIG 5

FIG 6

FIG 7

FIG 8